# EUROPEAN PATENT APPLICATION

(11) **EP 2 086 222 A1**
(43) Date of publication of application: **05.08.2009**
(21) Application number: 07829798.3
(22) Date of filing: 15.10.2007
(51) Int. Cl.: H04N 5/225, G11B 20/10, H04N 5/76

(54) **IMAGING DEVICE**

(30) Priority: 18.10.2006 JP 2006283947
(71) Applicant: Olympus Corporation, Tokyo 151-0072 (JP)
(72) Inventor: HIDAKA, Toru, Tokyo 151-0072 (JP)
(74) Representative: von Hellfeld, Axel
(86) International application number: PCT/JP2007/070064
(87) International publication number: WO 2008/047753

(57) **Abstract**

The present invention provides an imaging apparatus that enables a user to know a more accurate capacity that can be actually used for storage of image data. A control portion 7 houses image data, generated by an imaging portion 1 and processed by an image processing portion 2, in a storage portion 3 and erases data targeted for erase among image data that is stored by the storage portion 3. A capacity management portion 11 calculates the capacity of the data targeted for erase that can be erased by the time a capacity corresponding to a free capacity of the storage portion 3 prior to the start of imaging is consumed by new image data. Also, the capacity management portion 11 calculates the storageable remaining capacity corresponding to a capacity that consists of subtracting the capacity of the storage portion 3 consumed by the new image data from the capacity that consists of adding the free capacity of the storage portion 3 prior to the start of imaging to that capacity. A remaining capacity display portion 12 displays the storageable remaining capacity.

## Description

### [TECHNICAL FIELD]

The present invention relates to an imaging apparatus that is provided with a storage device that stores image data that is generated by imaging, and particularly relates to an imaging apparatus that displays the remaining capacity of the storage device.
Priority is claimed on Japanese Patent Application No. 2006-283947, filed October 18, 2006, the content of which is incorporated herein by reference.

### [BACKGROUND ART]

An imaging apparatus equipped with a storage medium conventionally has a remaining capacity display function for notifying a user of the storageable capacity to a storage medium. In relation to this, Patent Document 1 discloses displaying the free capacity of the recording medium and the total amount of the data that is set to be erasable together as the remaining capacity.

On the other hand, an improvement in the processing technology of the image data is also sought. In relation to this, Patent Document 2 discloses performing a storing operation and erasing operation on the storage medium in parallel.
Patent Document 1: Japanese Unexamined Patent Application, First Publication No. 2003-257164
Patent Document 2: Japanese Examined Patent Application, Second Publication No. H05-3643

### [DISCLOSURE OF THE INVENTION]

### [PROBLEM TO BE SOLVED BY THE INVENTION]

However, from the matter disclosed in Patent Document 1, it is unclear how the storing operation and the erasing operation are performed, and there is room for improvement on the point of processing efficiency. Therefore, by combining the remaining capacity display technology that is disclosed in Patent Document 1 and the image data storing/erasing technology that is disclosed in Patent Document 2, it is possible to improve the processing efficiency of the image data and inform the user of the capacity that can be used for storage of the image data, including the capacity that has been erased during imaging.

However, the following problems remain unsolved with the conventional art. In the case of performing the storing operation and the erasing operation in parallel on the storage medium, when the generating speed of the image data that is generated by imaging exceeds the erasing speed, there is the possibility of the free capacity of the recording medium becoming 0 before the erasing of the image data that is set to targeted for erase is finished. Accordingly, the total capacity of the image data that has been set as targeted for erase cannot always be utilized as the remaining capacity. In the conventional art, the above-mentioned point has not been considered in a remaining capacity display, and so the user cannot know the exact capacity that can be actually used for storage of the image data.

The present invention was achieved in view of the above circumstances, and has as its object to provide an imaging apparatus that enables a user to know a more accurate capacity that can be actually used for storage of the image data.

### [MEANS FOR SOLVING THE PROBLEM]

The present invention was achieved in order to solve the abovementioned problems, and is an imaging apparatus that has: an imaging device that images a subject and generates image data; a storage device that stores the image data; a control device that houses the image data generated by the imaging device in the storage device and erases data targeted for erase among the image data that is stored by the storage device; a first capacity calculating device that calculates the capacity of the data targeted for erase that can be erased by the time a capacity corresponding to a free capacity of the storage device prior to the start of imaging is consumed by new image data based on an imaging frame rate by the imaging device; a second capacity calculating device that calculates a storageable remaining capacity corresponding to a capacity that consists of subtracting the capacity of the storage device consumed by the new image data from the capacity that consists of adding the free capacity of the storage device prior to the start of imaging to the capacity that is calculated by the first capacity calculating device; and a remaining capacity display device that displays the storageable remaining capacity that was calculated by the second capacity calculating device.

Also, in the imaging apparatus of the present invention, the data targeted for erase is the image data that was housed in the storage device in the last shooting.

Also, in the imaging apparatus of the present invention, the control device houses the image data that was generated by the imaging device in a free region of the storage device that was generated by erasing the data targeted for erase.

### [EFFECT OF THE INVENTION]

According to the present invention, since the capacity of the data targeted for erase that can be erased by the time a capacity corresponding to a free capacity of the storage device prior to the start of imaging is consumed by new image data is calculated based on the imaging frame rate by the imaging device, and that capacity is reflected in the storageable remaining capacity, the effect is obtained of a user being able to know a more exact capacity that can actually be used for storage of the image data.

### [BRIEF DESCRIPTION OF THE DRAWINGS]

FIG 1 is a block diagram that shows the constitution of the imaging apparatus according to an embodiment of the present invention.
FIG 2 is a flowchart that shows the steps of an operation of the imaging apparatus according to an embodiment of the present invention.
FIG 3 is a flowchart that shows the steps of an operation (storing operation A) of the imaging apparatus according to an embodiment of the present invention.
FIG 4 is a flowchart that shows the steps of an operation (erasing operation A) of the imaging apparatus according to an embodiment of the present invention.
FIG. 5 is a flowchart that shows the steps of an operation (storing operation B) of the imaging apparatus according to an embodiment of the present invention.
FIG. 6 is a flowchart that shows the steps of an operation (erasing operation B) of the imaging apparatus according to an embodiment of the present invention.
FIG 7 is a flowchart that shows the steps of an operation (storing operation C/ erasing operation C) of the imaging apparatus according to an embodiment of the present invention.
FIG. 8 is a flowchart that shows the steps of an operation (storing operation D) of the imaging apparatus according to an embodiment of the present invention.
FIG. 9 is a flowchart that shows the steps of an operation (modification example) of the imaging apparatus according to an embodiment of the present invention.
FIG 10 is a reference drawing that shows a change in the capacity of the storage portion in an embodiment of the present invention.
FIG. 11 is a reference drawing that shows a change in the capacity of the storage portion in an embodiment of the present invention.
FIG 12 is a reference drawing that shows a change in the capacity of the storage portion in an embodiment of the present invention.
FIG 13 is a reference drawing that shows a change in the capacity of the storage portion in an embodiment of the present invention.

### [BRIEF DESCRIPTION OF THE REFERENCE NUMERALS]

1 imaging portion (imaging device); 2 image processing portion; 3 storage portion (storage device); 4, 5 storage medium; 6 frame rate determining portion; 7 control portion (control device); 8 imaging start instruction portion; 9 storing start instruction portion; 10 erasing instruction portion; 11 capacity management portion (first capacity calculating device, second capacity calculating device), 12 remaining capacity display portion (remaining capacity display device)

### [BEST MODE FOR CARRYING OUT THE INVENTION]

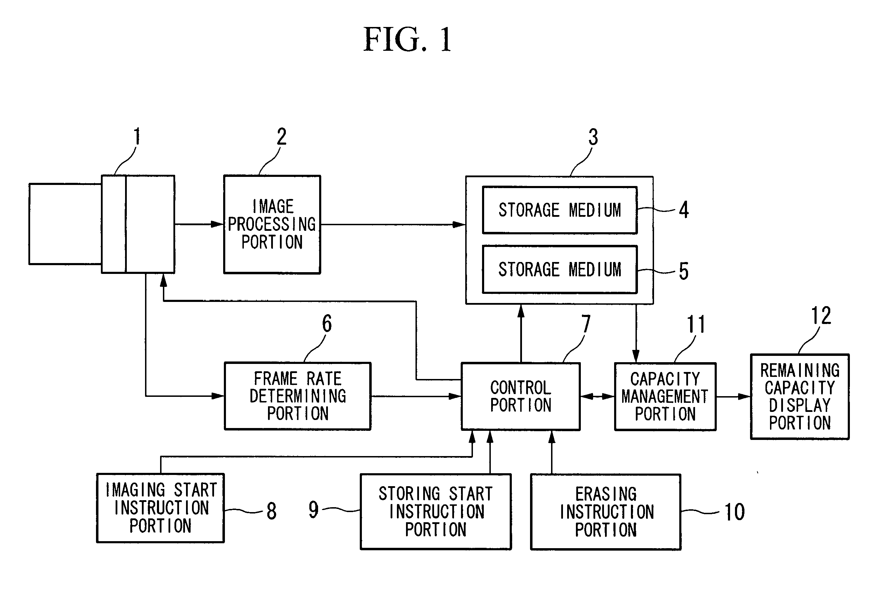

Hereinbelow, an embodiment of the present invention shall be described. FIG 1 shows the constitution of the imaging apparatus according to one embodiment of the present invention. An imaging portion 1 includes an optical system such as a lens that condenses light from a subject, an imaging element that images the subject image that was formed by light from the subject and converts it to an imaging signal, and a control circuit thereof. An image processing portion 2 carries out image processing of the imaging signal that has been output from the imaging portion 1, and generates image data.

A storage portion 3 is provided with storage media 4 and 5 for storing the image data that has been output from the image processing portion 2. A frame rate determining portion 6 acquires the imaging information from the imaging portion 1, and determines the frame rate of the imaging. A control portion 7 has a function and the like of controlling storing and erasing of the image data to the storage portion 3 in accordance with the frame rate of the imaging that has been determined by the frame rate determining portion 6.

An imaging start instruction portion 8 is equipped with a shutter release or the like that a user operates in order to input an imaging start instruction. The control portion 7 instructs the start of the imaging operation to the imaging portion 1 when the imaging start instruction of the user is detected based on a signal that has been output from the imaging start instruction portion 8. A storing start instruction portion 9 is equipped with a button or the like that a user operates in order to input the storing start instruction. The control portion 7 instructs the start of the storing operation to the storage portion 3 when the storing start instruction of the user is detected based on a signal that has been output from the storing start instruction portion 9. The imaging start instruction portion 8 and the storing start instruction portion 9 may be integrated.

An erasing instruction portion 10 is equipped with a button or the like that a user operates in order to designate image data targeted for erase. The control portion 7 identifies the image data targeted for erase based on a signal that has been output from the erasing instruction portion 10. The capacity management portion 11 manages the storage capacity of the storage media 4 and 5, and calculates the remaining capacity (storageable remaining capacity) of the storage media 4 and 5. The remaining capacity display portion 12 displays the remaining capacity calculated by the capacity management portion 11.

Although described below in detail, the capacity management portion 11 according to the present embodiment calculates the capacity of the image data targeted for erase that the control portion 7 is capable of erasing by the time the capacity corresponding to the free capacity of the storage portion 3 prior to the start of imaging is consumed by new image data. This capacity is calculated based on the generated data amount per unit time in consideration of the imaging frame rate and data amount per unit frame and the erase data amount per unit frame. Then, the capacity management portion 11 calculates as the remaining capacity that capacity corresponding to the capacity that consists of subtracting the capacity consumed by the new image data from the capacity that consists of adding the free capacity of the storage portion 3 prior to the start of imaging to that capacity.

Next, the operation of the imaging apparatus according to the present embodiment shall be described. In the present embodiment, the image data that is generated by imaging shall be first housed in a free region of the storage medium 4. Moreover, the image data targeted for erase shall be image data housed in the storage medium 5. Therefore, in the present embodiment, the storing of the image data to the storage media 4 and erasing of the image data of the storage medium 5 are performed in parallel.

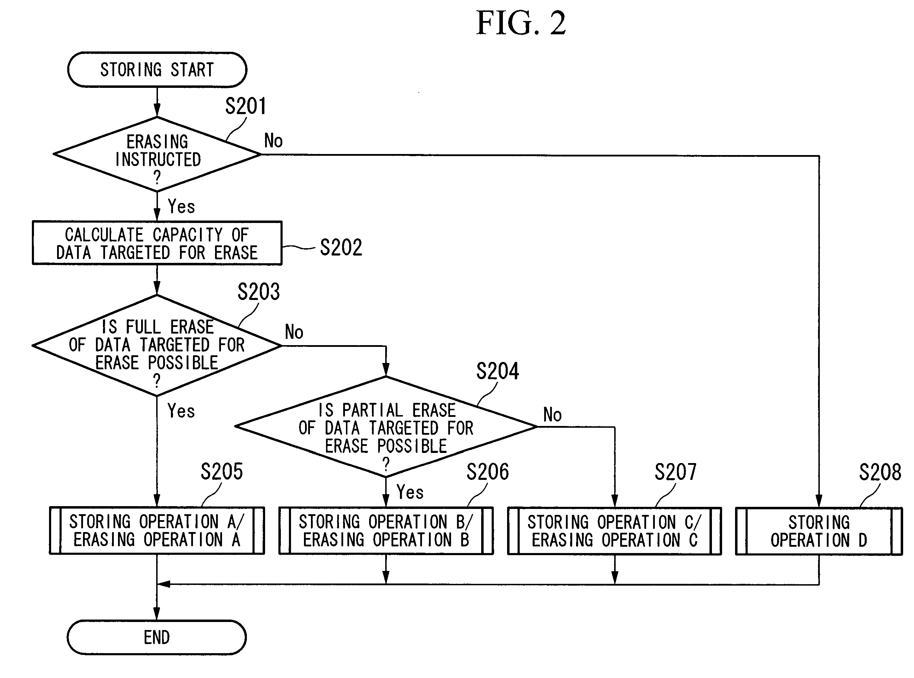

In the case of the storing start instruction being input by operation of the storing start instruction portion 9 after the imaging start instruction is input by operation of the imaging start instruction portion 8 and the imaging apparatus starts an imaging operation, the imaging apparatus starts the storing operation of the image data, and operates according to FIG 2. First, the control portion 7 judges whether or not, prior to the start of imaging, the image data targeted for erase was beforehand instructed by the user (Step S201).
In the case of the image data targeted for erase being instructed from the user, the control portion 7 instructs the capacity management portion 11 to calculate the capacity of the image data targeted for erase. The capacity management portion 11 upon receiving the instruction calculates the capacity of the image data targeted for erase that is housed in the storage medium 5 (Step S202).
Then, the control portion 7 judges whether or not a full erase is possible that erases all of the image data targeted for erase by the time the free capacity of the storage medium 4 prior to the start of imaging is filled by the new image data (Step S203).

At this time, the control portion 7 notifies the capacity management portion 11 of the imaging frame rate determined by the frame rate determining portion 6 and information of the image data targeted for erase. The capacity management portion 11 calculates the time required until the free capacity of the storage medium 4 is filled by new image data (called the first time) based on the generated data amount per unit time, which is the product of the data amount per unit frame and the frame rate, and the free capacity of the storage medium 4. Also, the capacity management portion 11 calculates the time required to erase all of the image data targeted for erase (called the second time) based on the capacity of the image data targeted for erase that is housed in the storage medium 5 and the data amount that the control portion 7 can erase per unit time. The capacity management portion 11 notifies each calculated above-mentioned time to the control portion 7.

The control portion 7 compares the abovementioned first time and second time that are informed from the capacity management portion 11 and, in the case that the first time ≥ the second time, it judges that a full erase is possible, and in the case that the first time < the second time, it judges that a full erase is not possible. In the case that the control portion 7 judges that a full erase is possible, the storing operation A/erasing operation A of Step S205 is performed. Also, in the case that the control portion 7 judges that a full erase is not possible, the control portion 7 judges whether or not a partial erase is possible that erases a portion of the image data targeted for erase by the time the free capacity of the storage medium 4 prior to the start of imaging is filled by the new image data (Step S204).

In this case, the control portion 7 requests the capacity management portion 11 for the information involved in this judgment. The capacity management portion 11 receives the request from the control portion 7 and, based on the data amount of a specified number of frames of the image data targeted for erase and the data amount that the control portion 7 can erase per unit time, calculates the time required for erasing the data of the specified number of frames among the image data targeted for erase (called the third time) and notifies it to the control portion 7. The control portion 7 compares the first time and the third time informed from the capacity management portion 11, and in the case that the first time ≥ the third time, it judges that a partial erase is possible, and in the case that the first time < the third time, it judges that a partial erase is not possible.

In the case that the control portion 7 has judged a partial erase to be possible, the storing operation B/erasing operation B of Step S206 is performed. Also, in the case that the control portion 7 has judged a partial erase to be not possible, the storing operation C/erasing operation C of Step S207 is performed. On the other hand, in the case that the image data targeted for erase is not instructed from the user, the storing operation D of Step S208 is performed.

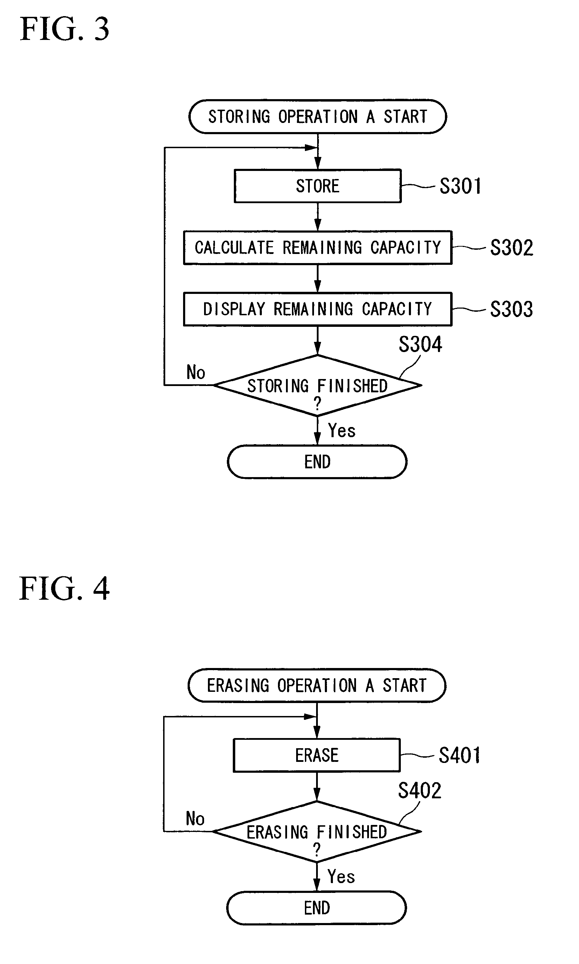

In the case that a full erase of the image data targeted for erase is possible, the storing operation A/erasing operation A of Step S205 is performed. In this case, the imaging apparatus operates according to FIG. 3 and FIG. 4. The operations respectively shown in FIG. 3 and FIG. 4 are performed in parallel. In the storing operation A shown in FIG 3, by the control of the control portion 7, the image data of one frame that is output from the image processing portion 2 is housed in the storage medium 4 (Step S301).

The capacity management portion 11 calculates as the remaining capacity of the storage portion 3 the capacity corresponding to the capacity that consists of subtracting the capacity of the storage medium 4 that is consumed by the new image data from the capacity that consists of adding the free capacity of the storage medium 4 prior to the start of imaging to the capacity of the image data targeted for erase calculated in Step S202 (Step S302). The capacity management portion 11 outputs information of the calculated remaining capacity to the remaining capacity display portion 12. The remaining capacity display portion 12 displays this remaining capacity (Step S303).

Then, the control portion 7 judges whether or not storing of the image data of all the frames has finished (Step S304). In the case of the imaging continuing and the storage of the image data not having finished, the process returns to the Step S301. In the case of the imaging being finished and the storing of the image data being finished, the series of processes of the storing operation A ends.

FIG. 4 shows the steps of the erasing operation A performed in parallel with the storing operation A. The control portion 7 erases the data of one frame among the image data targeted for erase housed in the storage medium 5 (Step S401). Then, the control portion 7 judges whether erasing of all frames of the image data targeted for erase is finished (Step S402). In the case of frames of the image data targeted for erase remaining, the process returns to Step S401. Also, in the case of the erasing of all frames of the image data targeted for erase being finished, the series of processes of the erasing operation A end.

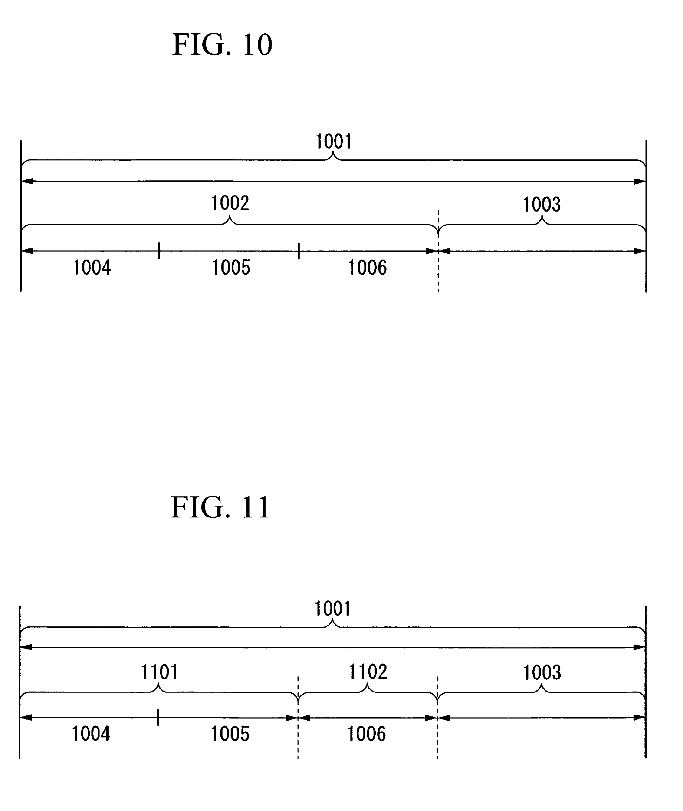

A change in the capacity of the storage portion 3 in the case of a full erase described above being performed is described with reference to FIG. 10 to FIG. 12. In a storage region 1001 of the storage portion 3 prior to the start of imaging as shown in FIG. 10, a portion is a stored imaging data region 1002, while the rest is a free region 1003. Also, a first imaging data 1004, a second imaging data 1005, and a third imaging data 1006 are housed in the stored imaging data region 1002.

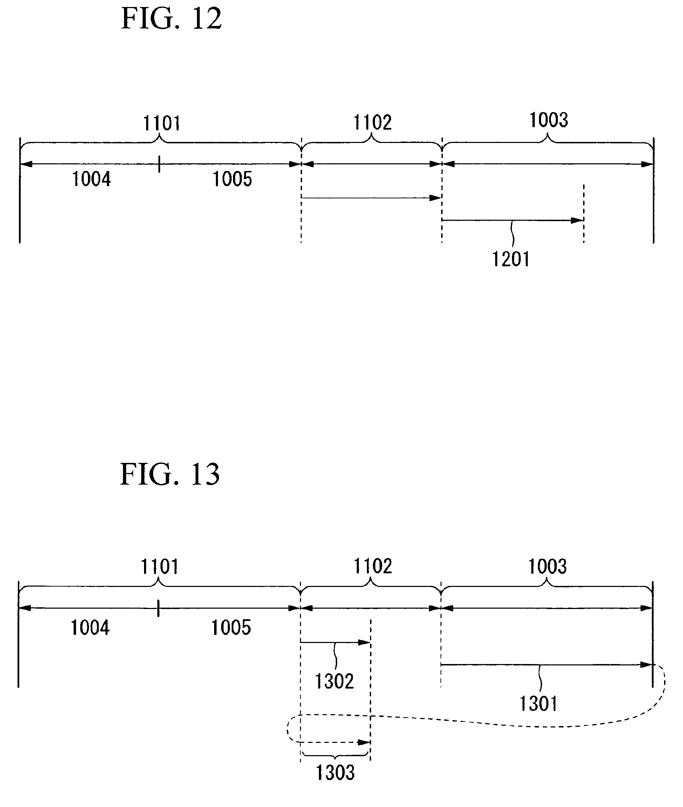

Here, as shown in FIG. 11, the region in which the first imaging data 1004 and the second imaging data 1005 are housed is made a stored imaging data region 1101, and the region in which the third imaging data 1006 is housed is made an erase target region 1102. When the imaging is started, as shown in FIG. 12, among the free region 1003 prior to the start of imaging, the region in which the image data is housed becomes a storage region 1201 due to imaging. Accordingly, the capacity corresponding to the remaining capacity of the storage portion 3 becomes the capacity of the free region 1003 prior to the start of imaging - the capacity of the storage region 1201 due to imaging + the capacity of the erase target region 1102. This capacity is calculated as the remaining capacity by the capacity management portion 11.

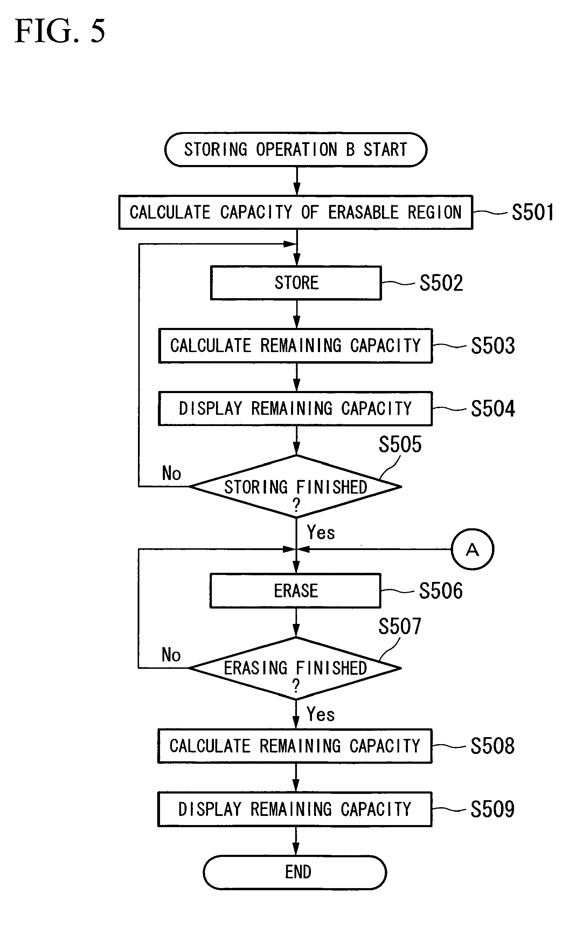

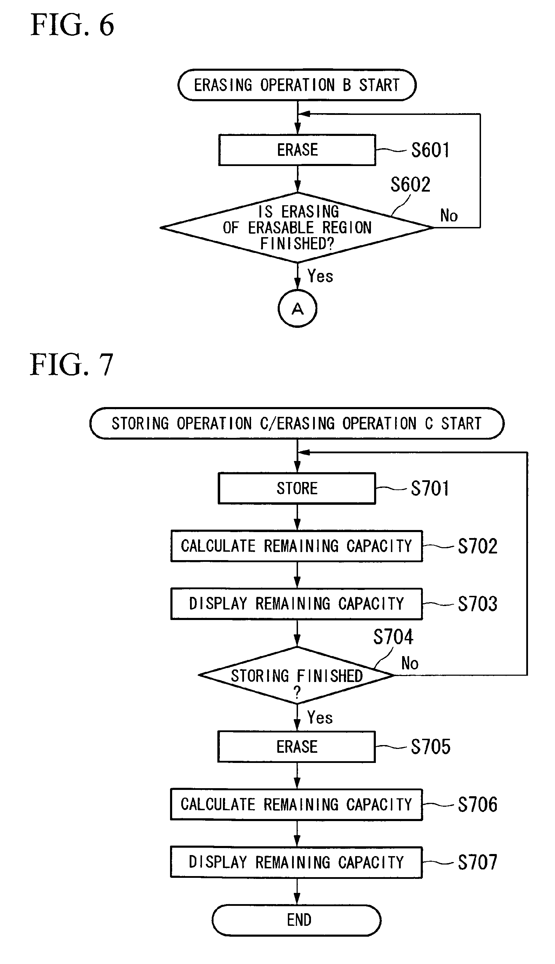

As shown in FIG. 2, the full erase of the image data targeted for erase is not possible, but in the case of a partial erase being possible, the storing operation B/erasing operation B of Step S206 is performed. In this case, the imaging apparatus operates according to FIG. 5 and FIG. 6. The operations shown respectively in FIG. 5 and FIG. 6 are performed in parallel. Even if a full erase is not possible, by erasing as much of the image data targeted for erase as possible during imaging, it is possible to more efficiently perform the imaging. In the storing operation B/erasing operation B shown in FIG. 5, the capacity management portion 11 calculates the capacity (hereinbelow referred to as the erasable capacity) of the image data targeted for erase that can be erased within the time required by the free capacity of the storage medium 4 being filled by the new image data (hereinbelow referred to as the image data of the erasable region), based on the data amount that the control portion 7 can erase per unit time (Step S501).

Then, the image data of one frame that is output from the image processing portion 2 is housed in the storage medium 4 by the control of the control portion 7 (Step S502). The capacity management portion 11 calculates the capacity corresponding to the capacity that consists of subtracting the capacity of the storage medium 4 consumed by the new image data from the capacity that consists of adding the free capacity of the storage medium 4 prior to the start of imaging to the erasable capacity calculated in Step S501 as the remaining capacity of the storage portion 3 (Step S503). The capacity management portion 11 outputs the information of the calculated remaining capacity to the remaining capacity display portion 12. The remaining capacity display portion 12 displays this remaining capacity (Step S504).

Then, the control portion 7 judges whether or not storage of the image data of all the frames is finished (Step S505). When the imaging is continuing and storage of the image data is not finished, the processing returns to Step S502. Moreover, when the imaging is finished and storage of the image data is finished, the processing proceeds to the processing of Step S506.

Here, the processing of the erasing operation B of FIG. 6 that is performed parallel with Steps S501 to S505 shall be described. The control portion 7 erases the data of one frame among the image data of the erasable region housed in the storage medium 5 (Step S601). Then, the control portion 7 judges whether or not erasing of all the frames of the image data of the erasable region is finished (Step S602). When frames of the image data of the erasable region remain, processing returns to Step S601. Also, when the erasing of all the frames of the image data targeted for erase is finished, the process proceeds to the processing of Step S506 of FIG. 5.

At Step S506, the control portion 7 erases the data of one frame among the image data targeted for erase that is housed in the storage medium 5 (Step S506). Then, the control portion 7 judges whether or not the erasing of all the frames of the image data targeted for erase is finished (Step S507). When frames of the image data targeted for erase remain, the processing returns to Step S506.

Moreover, when erasing of all the frames of the image data targeted for erase is finished, the capacity management portion 11 calculates the remaining capacity of the storage media 4 and 5 (Step S508), and outputs the information of the calculated remaining capacity to the remaining capacity display portion 12. The remaining capacity display portion 12 displays this remaining capacity (Step S509). By the above processing, the series of processes of the storing operation B/erasing operation B end.

Changes in the capacity of the storage portion 3 in the case of the above-described partial erase being performed shall be described with reference to FIG 10, FIG. 11, and FIG. 13. Among the storage region 1001 of the storage portion 3 prior to the start of imaging that is shown in FIG. 10, a portion is the stored imaging data region 1002, while the rest is a free region 1003. Also, the first imaging data 1004, the second imaging data 1005, and the third imaging data 1006 are housed in the stored imaging data region 1002.

Here, as shown in FIG. 11, the region in which the first imaging data 1004 and the second imaging data 1005 are housed is made a stored imaging data region 1101, and the region in which the third imaging data 1006 is housed is made the erase target region 1102. When the imaging is started or continued, as shown in FIG. 13, the free region 1003 prior to the start of imaging is completely consumed by the image data, and turns into the storage region 1301 by imaging. At this time, the imaging data of a partial erase region 1302 in the erase target region 1102 is erased. Accordingly, the capacity corresponding to the remaining capacity of the storage portion 3 becomes the capacity of the free region 1003 prior to the start of imaging - the capacity of the storage region 1301 due to imaging + the capacity of the partial erase region 1302. This capacity is calculated as the remaining capacity by the capacity management portion 11.

When the imaging is finished, the remaining data that has still not been erased among the imaging data housed in the erase target region 1102 is erased. When continuing imaging, the image data may be housed in an erased region 1303 that is generated by a partial erase. In this case, the control portion 7 houses the image data that is generated by the imaging portion 1 and processed by the image processing portion 2 in an empty region of the storage medium 5 generated by erasing the image data that is targeted for erase.

As shown in FIG. 2, when neither a full erase or a partial erase of the image data targeted for erase is possible, storing operation C/erasing operation C of Step S207 are performed. In this case, the imaging apparatus operates according to FIG. 7. In storing operation C/erasing operation C shown in FIG. 7, the image data of one frame that is output from the image processing portion 2 is housed in the storage medium 4 by control of the control portion 7 (Step S701). The capacity management portion 11 calculates the remaining capacity of the storage medium 4 (Step S702), and outputs the information of the calculated remaining capacity to the remaining capacity display portion 12. The remaining capacity display portion 12 displays this remaining capacity (Step S703).

Then, the control portion 7 judges whether or not storing of the image data of all the frames has finished (Step S704). In the case of the imaging continuing and the storage of the image data not having finished, the process returns to the Step S701. Also, in the case of the imaging being finished and the storing of the image data being finished, the control portion 7 erases the image data targeted for erase that is housed in the storage medium 5 (Step S705). The capacity management portion 11 calculates the remaining capacity of the storage medium 4 (Step S706), and outputs the information of the calculated remaining capacity to the remaining capacity display portion 12. The remaining capacity display portion 12 displays this remaining capacity (Step S707). By the above processing, the series of processes of the storing operation C/erasing operation C end.

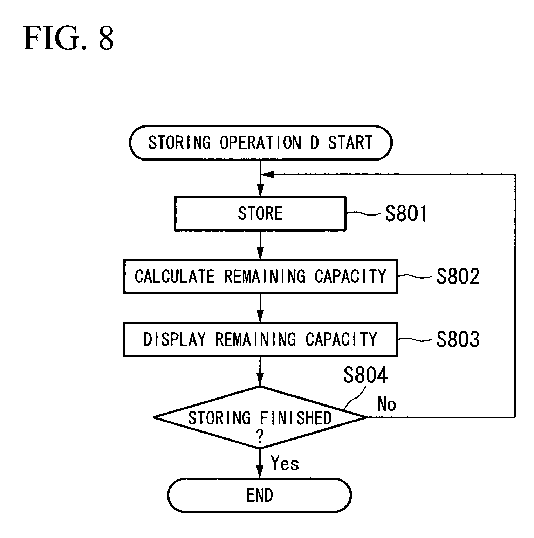

On the other hand, as shown in FIG 2, when the image data targeted for erase is not instructed by the user in advance prior to the start of imaging, the storing operation D of Step S208 is performed. In this case, the imaging apparatus operates in accordance with FIG 8. In the storing operation D shown in FIG. 8, the image data of one frame that is output from the image processing portion 2 is housed in the storage medium 4 by control of the control portion 7 (Step S801). The capacity management portion 11 calculates the remaining capacity of the storage medium 4 (Step S802), and outputs the information of the calculated remaining capacity to the remaining capacity display portion 12. The remaining capacity display portion 12 displays this remaining capacity (Step S803).

Then, the control portion 7 judges whether or not storage of the image data of all the frames is finished (Step S804). When the imaging is continuing and storage of the image data is not finished, the processing returns to Step S801. Moreover, when the imaging is finished and storage of the image data is finished, the series of processes of the storing operation D end.

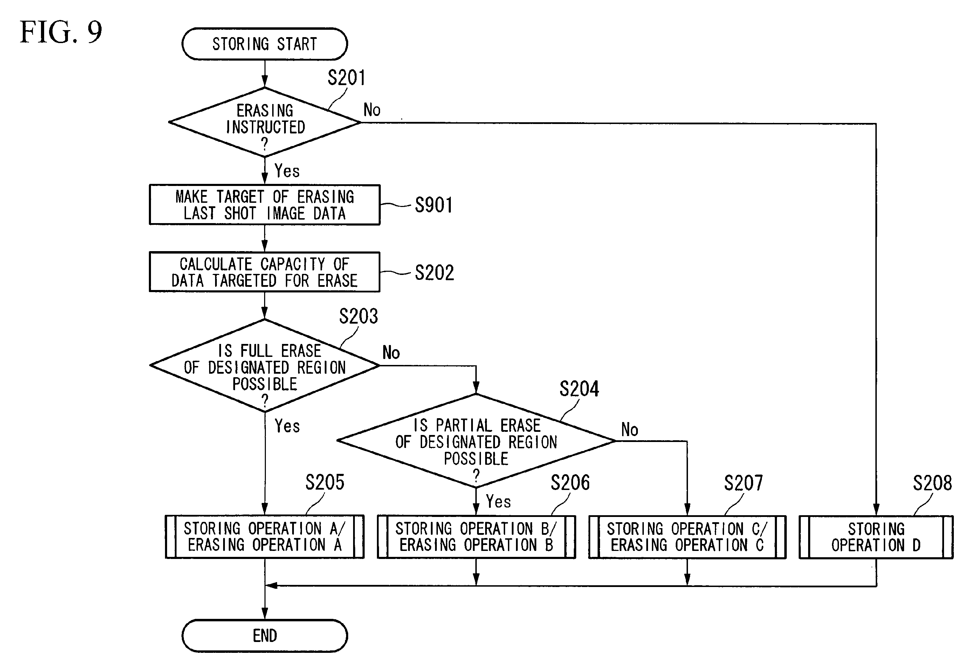

Next, the operation of a modification example of the present embodiment shall be described with reference to FIG. 9. In FIG 9, the same reference numerals are given to the steps that perform the same processes as FIG. 2, with descriptions of those steps being omitted. In Step S201 of FIG 9, the control portion 7 judges whether or not erasure of image data was instructed by the user in advance prior to the start of imaging. In the case of erasure of the image data having been instructed by the user, the control portion 7 specifies the image data targeted for erase as the image data housed in the storage medium 5 in the last shooting (Step S901), and instructs calculation of the capacity of that image data to the capacity management portion 11. The capacity management portion 11, upon receiving the instruction, calculates the capacity of the image data which is housed in the storage medium 5 and specified as targeted for erase (Step S202). Processing other than the above is as described previously.

As mentioned above, according to the present embodiment, based on the frame rate of the imaging according to the imaging portion 1, the capacity of the image data that is targeted for erase that can be erased by the time the capacity corresponding to the free capacity of the storage portion 3 prior to the start of imaging is consumed by the new image data that is generated by imaging is calculated, and that capacity is reflected to the remaining capacity of the storage portion 3 (storageable remaining capacity). By this, a user can know a more exact capacity that can actually be used for storage of the image data.

Also, as described with reference to FIG. 9, in the case of the image data that was stored during the last imaging being automatically designated as the image data targeted for erase, since a user need no longer select the image data by a complicated operation, it is possible to improve the operation of the imaging apparatus. This is particularly effective when the last shoot ended in failure and redoing the shoot by erasing the image data that was obtained in that shoot. In such a case, even if a user does not designate which image data is targeted for erase, the user need only specify deletion of image data, for example simply pressing a button once makes this designation possible. Accordingly, along with being able to improve the operability of the imaging apparatus, it is possible to shorten the time of designating the image data targeted for erase and improve the imaging efficiency.

Also, by housing the new image data in the free region of the storage portion 3 that is generated by erasing the image data targeted for erase in parallel with the operation that houses the image data in the storage portion 3, it is possible to more effectively use the storage region of the storage portion 3 and perform imaging for a longer period. For example, in the case of all the free region of the storage medium 4 that existed before the imaging being consumed by new image data during imaging, if the imaging is continued by housing the new image data in the free region of the storage medium 5 generated by erasing the image data targeted for erase, it is possible to perform imaging for a longer period without interruptions to the imaging.

While preferred embodiments of the present invention have been described in detail above with reference to the drawings, specific constitutions are not restricted to these embodiments and design modifications are included within the scope of not departing from the spirit of the present invention. For example, as the storing start instruction portion 9 or the erasing instruction portion 10, in addition to the constitutions of FIG 1, needless to say there are various variations such as those due to sharing of switches and menu operations and the like.

Also, for convenience, the storage medium 4 was used for storage and the storage medium 5 was used for erasing, but the constitution of the storage media is not restricted to these, and various variations are possible. Moreover, in FIG. 10 to FIG 13, the regions of storing and erasing image data were described using arrows, but these descriptions were for convenience, and in practice the storing and erasing of the image data is controlled and the storage regions are managed by various methods such as using addresses.

### [INDUSTRIAL APPLICABILITY]

With the present invention, it is possible to provide an imaging apparatus that enables a user to know a more accurate capacity that can be actually used for storage of image data.

## Claims

1. An imaging apparatus comprising:
an imaging device that images a subject and generates image data;
a storage device that stores the image data;
a control device that houses the image data generated by the imaging device in the storage device and erases data targeted for erase among the image data that is stored by the storage device;
a first capacity calculating device that calculates the capacity of the data targeted for erase that can be erased by the time a capacity corresponding to a free capacity of the storage device prior to the start of imaging is consumed by new image data based on an imaging frame rate by the imaging device;
a second capacity calculating device that calculates a storageable remaining capacity corresponding to a capacity that consists of subtracting the capacity of the storage device consumed by the new image data from the capacity that consists of adding the free capacity of the storage device prior to the start of imaging to the capacity that is calculated by the first capacity calculating device; and
a remaining capacity display device that displays the storageable remaining capacity that was calculated by the second capacity calculating device.

2. The imaging apparatus according to claim 1, wherein the data targeted for erase is the image data that is housed in the storage device in the last shooting.

3. The imaging apparatus according to claim 1 or claim 2, wherein the control device houses the image data that was generated by the imaging device in a free region of the storage device that was generated by erasing the data targeted for erase.
